# EUROPEAN PATENT APPLICATION

(11) **EP 3 156 432 A1**
(43) Date of publication of application: **19.04.2017**
(21) Application number: 15806969.0
(22) Date of filing: 12.06.2015
(51) Int. Cl.: C08G 18/66, B29C 39/02, B29C 43/02, B29C 43/34, C08G 18/76, B29K 75/00, B29K 105/04, B29L 31/58, C08G 101/00

(54) **SOFT POLYURETHANE FOAM AND PAD FOR SEAT**

(30) Priority: 12.06.2014 JP 2014121919
(71) Applicant: Bridgestone Corporation, Tokyo 104-8340 (JP)
(72) Inventor: YOSHITOMI Kosuke, Tokyo 104-8340 (JP); SHINOHARA Toshimitsu, Tokyo 104-8340 (JP)
(74) Representative: Oxley, Robin John George
(86) International application number: PCT/JP2015/067017
(87) International publication number: WO 2015/190596

(57) **Abstract**

The present invention provides a soft polyurethane foam which is obtained by expansion molding a starting foam liquid that contains a polyol, a polyisocyanate, a crosslinking agent, a foaming agent and a catalyst. This soft polyurethane foam is configured such that: a polyether polyol having a weight-average molecular weight (Mw) of 3,000 to 12,000 and 3.5 to 4 functional groups is contained therein as the polyol; the value of (ethylene oxide groups)/(propylene oxide groups) (in terms of a molar ratio) in all compounds contained therein as the crosslinking agent is 100 or more; a short-chain polyol having a weight-average molecular weight of 1,000 or less is contained therein as the crosslinking agent; and tolylene diisocyanate is contained therein as the polyisocyanate in an isocyanate equivalent of 70 or more.

## Description

### Technical Field

The present invention relates to a soft polyurethane foam used for various types of molded articles such as automobile components and indoor household goods, and a seat pad (seat cushion material) using the soft polyurethane foam.

The present application claims priority based on Japanese Patent Application No. 2014-121919 filed in Japan on June 12, 2014, the contents of which are incorporated herein.

### Background Art

Soft polyurethane foams are used in seat pads for vehicles such as automobiles, cushion materials used indoors in chairs, beds, or the like, and in various applications such as buffering materials for flooring in a house. There is a demand for various mechanical characteristics depending on the application and there is a demand for seating comfort in seat pads for automobiles.

The applicant proposed the polyurethane foam in Patent Document 1 as a lightweight polyurethane foam which has an appropriate resilience and excellent vibration absorption characteristics. This polyurethane foam is a polyurethane foam formed by expansion molding a polyurethane starting foam liquid which includes a polyol component and an isocyanate component, and a polyether polyol where the molecular weight, the degree of unsaturation, and the molecular weight/number of functional groups are defined in a specific range is used as the main component and further blended with an organically treated inorganic filler.

### Citation List

### Patent Document

[Patent Document 1] Japanese Unexamined Patent Application, First Publication No. 2008-127514

### Summary of Invention

### Technical Problem

In recent years, in seat pads for vehicles, there has been a demand to further enhance the comfort and sense of stability when seated. For example, in a case where G (acceleration in the centrifugal direction) generated when an automobile travels in a loose curve or changes lane while traveling is applied to an occupant in a lateral direction, there is a demand to reduce the sense of instability (contact shifting laterally) by supporting at least the hips out of the hips and the back of the occupant.

The present invention has been made in view of the above circumstances and has an object of providing a seat pad provided with seating comfort and a certain sense of stability, and a soft polyurethane foam which is able to realize the seat pad.

### Solution to Problem

A soft polyurethane foam obtained by expansion molding a starting foam liquid which contains a polyol, a polyisocyanate, a crosslinking agent, a foaming agent, and a catalyst, in which a polyether polyol having a weight-average molecular weight Mw of 3,000 to 12,000 and 3 to 4 functional groups is contained therein as the polyol, an ethylene oxide group/propylene oxide group (molar ratio) in all compounds included therein as the crosslinking agent is 100 or more, a short-chain polyol having a weight-average molecular weight of 1,000 or less is contained therein as the crosslinking agent, and tolylene diisocyanate is contained therein as the polyisocyanate in an isocyanate equivalent of 70 or more.

### Effects of Invention

The starting foam liquid which forms the soft polyurethane foam of the present invention has a novel composition. As a result, it is possible to obtain a sense of seated comfort and a sense of stability different than those in the related art due to the appropriate resilience when seated and the reduction of the sense of instability in a case where acceleration is applied in the lateral direction.

### Brief Description of Drawings

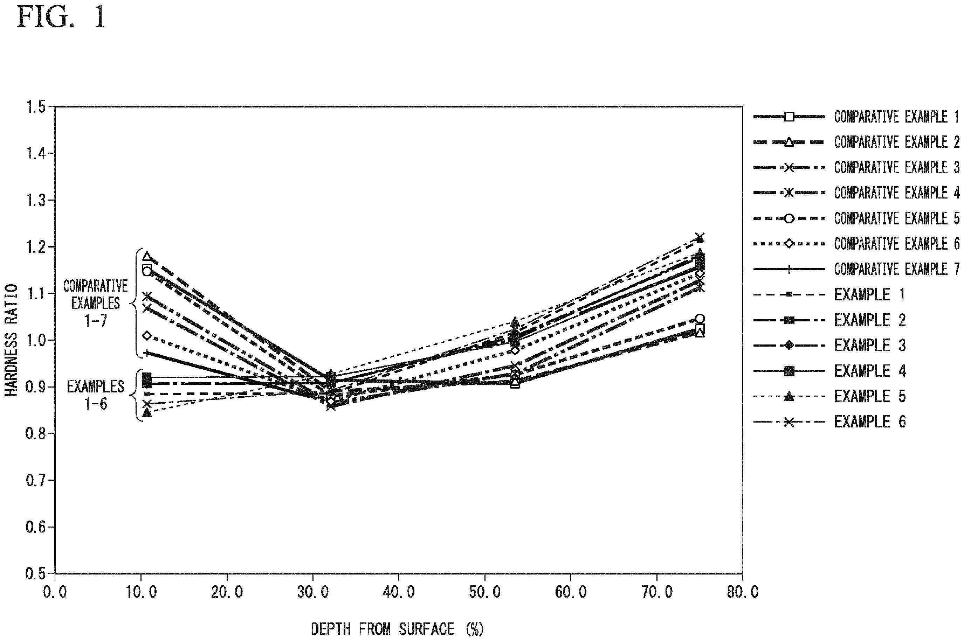

FIG. 1 is a graph which shows the rigidity distribution in the thickness direction of a produced soft polyurethane foam.

### Description of Embodiments

Below, description will be given of the present invention with reference to the drawings based on favorable embodiments; however, the present invention is not limited to these embodiments.

A favorable embodiment of the soft polyurethane foam of the present invention is a soft polyurethane foam obtained by expansion molding a starting foam liquid which contains a polyol, a polyisocyanate, a crosslinking agent, a foaming agent, and a catalyst. Examples of the characteristics of the material forming the starting foam liquid described above include the following (A) to (D).
(A) A polyether polyol having a weight-average molecular weight Mw of 3,000 to 12,000 and 3 to 4 functional groups (number of hydroxyl groups) is contained as the polyol component.
(B) An ethylene oxide group/propylene oxide group (molar ratio) in all (the total of the crosslinking agent) of the compounds included in the starting foam liquid as the crosslinking agent is 100 or more.
(C) A short chain polyol having a weight-average molecular weight of 1,000 or less is contained as the crosslinking agent.
(D) Tolylene diisocyanate (TDI) is contained as the polyisocyanate component in an isocyanate equivalent of 70 or more.

### <Polyol Component>

A polyether polyol having a weight-average molecular weight Mw of 3,000 to 12,000 and 3 to 4 functional groups (number of hydroxyl groups) is contained as the polyol component forming the starting foam liquid. As the polyether polyol forming the starting foam liquid described above, since the reactivity is favorable, a polyether polyol obtained by ring-opening polymerization of an alkylene oxide is preferable.

Examples of alkylene oxide include propylene oxide (PO), ethylene oxide (EO), and the like. The alkylene oxide used as the material of the polyether polyol may be one or more types.

From the point of view of the raw material activity, a polyether polyol obtained by combining the PO and EO described above is favorable as the polyether polyol forming the starting foam liquid. The blending ratio of PO and EO (molar ratio) is not particularly limited and, for example, as EO/PO (molar ratio), 8/92 to 25/75 is preferable, and 13/87 to 20/80 is more preferable. When EO/PO (molar ratio) is within the range described above, it is possible to easily generate a polyether polyol with favorable reactivity.

The number of hydroxyl groups (functional groups) included in one molecule of the polyether polyol forming the starting foam liquid is preferably 3 to 4, and more preferably 3.5 to 4. When in these favorable ranges, the viscosity of the starting foam liquid is appropriate and a soft polyurethane foam having excellent physical properties is obtained. Here, in addition to the polyether polyol of (A), a polyether polyol with two functional groups may be combined therewith as an optional component.

The weight-average molecular weight Mw of the polyether polyol forming the starting foam liquid is preferably 3,000 to 12,000, more preferably 3,000 to 8,000, and even more preferably 5,000 to 8,000. When the weight-average molecular weight of the polyether polyols is 12,000 or less, the viscosity of the starting foam liquid does not become excessive and the stirring efficiency is favorable. On the other hand, when the weight-average molecular weight of the polyether polyol is 3,000 or more, a soft polyurethane foam having favorable rebound resilience is obtained. Here, the weight-average molecular weight Mw is a value calculated as a polystyrene conversion value using gel permeation chromatography (GPC method).

The degree of unsaturation of the polyether polyol forming the starting foam liquid is preferably 0.03 meq/g or less. When the degree of unsaturation described above is 0.03 meq/g or less, a soft polyurethane foam with favorable physical properties such as durability is obtained. Here, the "degree of unsaturation" is based on Japanese Industrial Standards JIS K 1557-1970 and refers to the total degree of unsaturation (meq/g) measured using a method in which acetic acid freed by the action of mercuric acetate on an unsaturated bond in a sample is subjected to titration using potassium hydroxide.

The polyether polyol which is contained in the starting foam liquid as the polyol component may be one or more types.

In a case where the polyether polyol which is contained in the starting foam liquid as the polyol component is one type, a polyether polyol having a weight-average molecular weight of 7,000 or more and four functional groups (tetrafunctional) is preferably contained. With such a polyether polyol, it is possible to greatly reduce the sense of instability in a case of using the soft polyurethane foam obtained by expansion molding as a seat pad.

From the point of view of easily imparting desired physical properties to the soft polyurethane foam formed by expansion molding the starting foam liquid, with respect to the total amount of the polyol component included in the starting foam liquid, the total content of the one or more types of the polyether polyols corresponding to the polyether polyol of (A) is preferably 20 to 80 mass%, more preferably 30 to 70 mass%, and even more preferably 40 to 60 mass%.

As the polyol component forming the starting foam liquid, in addition to the polyether polyol, a polymer polyol is preferably combined therewith. By combining the polymer polyol, it is possible to easily impart an appropriate hardness and elasticity to the soft polyurethane foam. With respect to the total amount of the polyol component included in the starting foam liquid, the total content of the one or more types of polymer polyols is preferably 20 to 80 mass%, more preferably 30 to 70 mass%, and even more preferably 40 to 60 mass%.

As the polymer polyol, it is possible to apply a polymer polyol commonly used as a polyurethane expansion-molded body. Examples thereof include polymer polyols where polymer components such as polyacrylonitrile, acrylonitrile-styrene copolymers are graft copolymerized with a polyether polyol formed of polyalkylene oxide and with a weight-average molecular weight Mw of 3,000 to 8,000 and more preferably 4,000 to 7,000. As the alkylene oxide which is a raw material of the polyalkylene oxide, alkylene oxides including propylene oxide (PO) are preferable as a functional group (a polymerizable group), and alkylene oxides including only propylene oxide, or alkylene oxides including both propylene oxide and ethylene oxide (EO) are more preferable. In addition, the content of the polymer component described above with respect to the total amount of the polymer polyol described above is preferably 25 to 50 mass%.

As the mixing ratio in a case of mixing polyether polyol and polymer polyol as the polyol component forming the starting foam liquid, for the polyether polyol/polymer polyol (mass ratio), 80/20 to 20/80 is preferable, 70/30 to 30/70 is more preferable, and 60/40 to 40/60 is even more preferable. When in the range described above, a soft polyurethane foam having the desired physical properties is easily obtained.

### <Polyisocyanate Component>

As the polyisocyanate component which forms the starting foam liquid, tolylene diisocyanate is contained as the polyisocyanate in an isocyanate equivalent of 70 or more.

Tolylene diisocyanate (TDI) is a polyisocyanate component which is commonly used in the field of polyurethane foams. Specific examples of TDI include 2,4-tolylene diisocyanate (2,4-TDI), 2,6-tolylene diisocyanate (2,6-TDI), and the like. As a commercial product, a mixture of 2,4-TDI/2,6-TDI=80/20 (mass ratio) is manufactured and sold. The TDI forming the starting foam liquid may be a mixture of 2,4-TDI and 2,6-TDI, may be 2,4-TDI alone, or may be 2,6-TDI alone. That is, in the starting foam liquid, one or more types of TDI may be contained.

As the polyisocyanate component which forms the starting foam liquid, diphenylmethane diisocyanate (MDI) is preferably combined therewith.

Diphenylmethane diisocyanate (MDI) is a polyisocyanate component which is commonly used in the field of polyurethane foams. Specific examples of MDI include 4,4-diphenylmethane diisocyanate (4,4-MDI), 2,4-diphenylmethane diisocyanate (2,4-MDI), 2,2-diphenylmethane diisocyanate (2,2-MDI), polymeric MDI, crude MDI, and the like commonly referred to as monomeric MDI. In the starting foam liquid, one or more types of MDI may be contained.

The "isocyanate equivalent" which represents the total amount of the polyisocyanate included in the starting foam liquid refers to the molar ratio of the isocyanate group when the active hydrogen amount (mol) in the starting foam liquid is set as 100.

The isocyanate equivalent derived from the TDI included in the starting foam liquid is at least 70 or more, preferably 70 to 120, and more preferably 80 to 110. When the isocyanate equivalent described above is 70 or more, it is possible to prevent stirring failure of the starting foam liquid. When the isocyanate equivalent described above is 120 or less, it is possible to prevent the collapse of the form.

In a case where the TDI and the MDI are contained in the starting foam liquid, the isocyanate equivalent derived from the MDI included in the starting foam liquid is preferably 70 to 120, and more preferably 80 to 110.

In a case where the TDI and the MDI are contained in the starting foam liquid, the total isocyanate equivalent derived from the TDI and the MDI included in the starting foam liquid is preferably 70 to 120, and more preferably 80 to 110. When the isocyanate equivalent described above is 70 or more, it is possible to prevent stirring failure of the starting foam liquid. When the isocyanate equivalent described above is 120 or less, it is possible to prevent the collapse of the foam.

The mass ratio (TDI/MDI) of TDI and MDI included in the starting foam liquid is preferably 100/0 to 60/40, more preferably 95/5 to 70/30, and even more preferably 90/10 to 80/20. When in a mass ratio in a favorable range described above, it is possible to easily impart properties contributing to the reduction of the sense of instability or the like in the soft polyurethane foam formed by expansion molding the starting foam liquid.

As an optional component, a well-known polyisocyanate component other than MDI may be added. Examples thereof include triphenyl diisocyanate, xylene diisocyanate, polymethylene polyphenylene polyisocyanate, hexamethylene diisocyanate, isophorone diisocyanate, and the like.

From the point of view of easily imparting desired physical properties to the soft polyurethane foam formed by expansion molding the starting foam liquid, the total content of the one or more types of the (D) tolylene diisocyanate with respect to the total amount of the polyisocyanate component included in the starting foam liquid is preferably 60 mass% or more, more preferably 70 to 100 mass%, and even more preferably 80 to 100 mass%.

### <Crosslinking Agent Component>

For the soft polyurethane foam formed by expansion molding the starting foam liquid to have the desired physical properties, as a crosslinking agent component forming the starting foam liquid, a crosslinking agent with a higher reactivity than water with respect to the polyisocyanate component is preferably contained as the main component. Normally, the reactivity with respect to the polyisocyanate component decreases in order of glycerin, crosslinking agents having ethylene oxide groups (EO-based crosslinking agents), water, and crosslinking agents having propylene oxide groups (PO-based crosslinking agents). Based on the above, the molar ratio (EO group molar number/PO group molar number) of the EO group and the PO group in the entirety of the one or more types of compound contained as the crosslinking agent in the starting foam liquid is preferably 100 or more, more preferably 105 or more, and even more preferably 110 or more. The higher the molar ratio, the more preferable the ratio is. That is, in the starting foam liquid, it is preferable that a crosslinking agent having a PO group be substantially not contained.

Here, the ethylene oxide group (EO group) refers to a group which has a monovalent bond where one hydrogen atom forming the ethylene oxide is removed. The propylene oxide group (PO group) refers to a group having a monovalent bond where one hydrogen atom forming the propylene oxide is removed.

As a specific crosslinking agent component, it is possible to apply a known crosslinking agent used in the field of polyurethane foams. The molecular weight of the crosslinking agent is normally preferably 1,000 or less. From the point of view of increasing the molar ratio of the EO group/PO group described above, a commercially available crosslinking agent labelled as "EO (group)/PO (group)=100/0" is preferable. In addition, examples of particularly preferable crosslinking agents include glycerin (glycerol).

As a crosslinking agent component, a short-chain polyol with a weight-average molecular weight of 1,000 or less including glycerin is preferable in the same manner as glycerin. As the short-chain polyol described above, for example, low-molecular-weight polyols having a molecular weight of 70 to 140 are preferable and terminal primary polyols having a hydroxyl group at a terminal of the molecule are more preferable. Examples of low-molecular-weight polyols include propane diol, glycerin, trimethylol propane, pentaerythritol, and the like. Among the above, glycerin is more preferable.

The crosslinking agent included in the starting foam liquid may be one or more types. In a case of combining a crosslinking agent where the EO group/PO group (molar ratio) is 100 or more and glycerine, the mass ratio of the crosslinking agent/glycerine is preferably 10:1 to 1:10, more preferably 5:1 to 1:5, even more preferably 2:1 to 1:2, and particularly preferably 1:2 to 1:1.

The total content of the crosslinking agent component included in the starting foam liquid with respect to 100 parts by mass of the polyol component is preferably 0.5 to 10 parts by mass, and more preferably 1 to 5 parts by mass. When at the upper limit value or less of the range described above, it is possible to prevent the individual foaming being excessively high, the molding being difficult, and the foam collapsing. When at the lower limit value or more of the range described above, the crosslinking agent effect is sufficiently obtained.

### <Delay Agent>

The starting foam liquid preferably contains an alkanolamine as a crosslinking delay agent. The crosslinking reaction (polymerization reaction) at the time of expansion molding is prevented from advancing rapidly and a soft polyurethane foam provided with an appropriate hardness is easily obtained.

As the alkanolamine as the delay agent, primary to tertiary amines having 1 to 3 monovalent alkanol groups in which one or more hydrogen atoms of an acyclic saturated hydrocarbon is substituted with a hydroxyl group is preferable.

Examples of the alkanolamine as the delay agent include monoethanolamine, diethanolamine, triethanolamine, amino ethyl ethanolamine, and the like. Here, the delay agent is more preferably an alkanolamine other than diethanolamine. Diethanolamine is preferably added as a catalyst to be described below rather than as the delay agent.

The alkanolamine which is included in the starting foam liquid may be one or more types. In the starting foam liquid, the content of the alkanolamine with respect to 100 parts by mass of the polyol component is preferably 0.1 to 1.0 part by mass, more preferably 0.2 to 0.7 parts by mass, and even more preferably 0.3 to 0.5 parts by mass. When at a mass ratio in a favorable range described above, it is possible to easily impart properties contributing to the reduction of the sense of instability or the like in the soft polyurethane foam formed by expansion molding the starting foam liquid.

### <Foaming Agent Component>

As the foaming agent components forming the starting foam liquid, water is preferably used. Since the water generates carbon dioxide gas by reacting with the polyisocyanate, the water functions as a foaming agent.

The content of the water in the starting foam liquid with respect to 100 parts by mass of the polyol component is preferably 1 to 7 parts by mass and more preferably 2 to 5 parts by mass. When in the range described above, a soft polyurethane foam having desired physical properties is easily obtained. In addition, it is possible to prevent deterioration of the heat compression residual strain properties of the obtained soft polyurethane foam.

### <Catalyst Component>

Examples of the catalyst component forming the starting foam liquid include known catalysts used in the field of polyurethane foams.

### Examples of known catalysts include amine-based catalysts and tin catalysts.

Normally, known catalysts are broadly divided and classified into gelling catalysts promoting the resinification of the polyurethane and blowing catalysts promoting foaming of the polyisocyanate component.

Suitable gelling catalysts include tertiary amine catalysts particularly promoting the reaction of polyisocyanate and polyol and are not particularly limited; however, examples thereof include triethylenediamine, 1,8-diazabicyclo [5.4.0] undecene-7, and imidazoles such as 1-methyl imidazole, 1,2-dimethyl imidazole, and 1-isobutyl-2-methyl imidazole, 1,1' -(3-(dimethylamino) propyl) imino) bis (2-propanol). In addition, suitable blowing catalysts include tertiary amine catalysts which particularly promote the reaction of the isocyanate and water and effectively generate a carbon dioxide gas, and these blowing catalysts are generally used for improving the fluidity of the foam and the dimensional stability. The blowing catalyst is not particularly limited; however, examples thereof include bis (2-dimethylaminoethyl) ether, N,N,N',N'',N''-pentamethyldiethylenetriamine, and N,N,N',N'',N''',N'''-hexamethyltriethylenetetramine, and the like.

Here, in the starting foam liquid, at least a gelling catalyst is preferably contained out of the gelling catalyst and the blowing catalyst as the catalyst component.

The mass ratio of the gelling catalyst:the blowing catalyst contained in the starting foam liquid is preferably 100:0 to 100:100, more preferably 100:0 to 80:20, even more preferably 100:0 to 90:10, and particularly preferably 100:0 to 95: 5.

As the amine-based catalyst, it is preferable to use a gelling catalyst where the ratio of the blowing activity with respect to the gelling catalyst constant is 10x10⁻¹ or less in order to promote the resinification (gelling) reaction between the polyols and the polyisocyanates and to promote the urethane bond generation.

Here, the gelling catalyst constant is a constant which determines the speed of the resinification reaction between the polyols and the polyisocyanates and the higher the value thereof, the higher the crosslinking density of the foam and the more favorable the mechanical properties of the foam. Specifically, the reaction constant of the gelling reaction between tolylene diisocyanate and diethylene glycol is used. On the other hand, the blowing activity is a constant which determines the speed of the foaming reaction of the polyisocyanates and water, and the higher the value thereof, the higher the communication property between the cells of the foam. Specifically, the reaction constant of the foaming reaction between tolylene diisocyanate and water is used. The ratio of the two catalyst constants described above represents the balance between both catalysts.

Examples of suitable amine-based catalysts are illustrated below and also include the specific examples of the gelling catalyst.

Specific examples of the gelling catalyst include the catalysts described above and triethylenediamine (TEDA), mixtures of triethylenediamine and polypropylene glycol, N,N,N' ,N'-tetramethylethylenediamine, N,N,N' ,N'-tetramethyl propylene diamine, N,N,N' ,N",N"-pentamethyl-(3-aminopropyl) ethylenediamine, N,N,N',N",N"-pentamethyl dipropylenetriamine, N,N,N',N'-tetramethylguanidine, tertiary amines such as 135-tris (N,N-dimethylaminopropyl) hexahydro-S-triazine, imidazoles such as 1-methyl imidazole, 1,2-dimethyl imidazole, and 1-isobutyl-2-methyl imidazole, as well as N,N,N',N'-tetramethyl hexamethylenediamine, N-methyl-N' -(2-dimethylaminoethyl) piperazine, N,N' -dimethylpiperazine, N-methyl piperazine, N-methyl morpholine, N-ethylmorpholine, and the like.

The content of the amine-based catalyst in the starting foam liquid with respect to 100 parts by mass of the polyol component is preferably 0.1 to 2.0 parts by mass, more preferably 0.5 to 1.5 parts by mass, and even more preferably 0.75 to 1.0 part by mass. When at the lower limit value of 0.1 parts by mass or more in the range described above, it is possible to prevent collapsing of the foam. When at the upper limit value of 2.0 parts by mass or less in the range described above, it is possible to prevent the generation of shrinkage as independent closed cells.

Specific examples of the tin catalyst include known organic tin catalysts such as stannous octoate, stannous laurate, dibutyl tin dilaurate, dibutyl tin maleate, dibutyl tin diacetate, dioctyl tin diacetate, tin octylate, and the like.

The content of the tin catalyst in the starting foam liquid with respect to 100 parts by mass of the polyol component is preferably 0.01 to 0.5 parts by mass, more preferably 0.01 to 0.4 parts by mass, and even more preferably 0.01 to 0.2 parts by mass.

### <Foam Stabilizer Component>

A foam stabilizer may be included in the starting foam liquid. As the foam stabilizer, it is possible to apply a known foam stabilizer used in the field of polyurethane foams and examples thereof include silicone-based foam stabilizers, anionic foam stabilizers, and cationic foam stabilizers. These foam stabilizers include foam stabilizers having a hydroxyl group at the molecular chain terminal.

The content of the foam stabilizer in the starting foam liquid with respect to 100 parts by mass of the polyol component is preferably 0.1 to 5 parts by mass, more preferably 0.2 to 3 parts by mass, and even more preferably 0.5 to 1.5 parts by mass. Normally, the effect of the foam stabilizer is sufficiently obtained with a content proportion of 5 parts by mass or less. In addition, when the content proportion is 0.1 parts by mass or more, the stirring property of the polyol component and the polyisocyanate component is improved and a soft polyurethane foam having desired physical properties is easily obtained.

### <Other Optional Components>

Here, it is possible to blend various types of additives in the starting foam liquid, as necessary. For example, it is possible to blend coloring agents such as pigments, chain extenders fillers such as calcium carbonate, flame retardants, antioxidants, ultraviolet absorbers, light stabilizers, conductive substances such as carbon black, antibacterial agents, and the like. The blending amount of the various types of additives is adjusted appropriately according to the use and purpose.

### <Preparation Method of Starting Foam Liquid>

The preparation method of the starting foam liquid is not particularly limited, and examples thereof include a preparation method obtaining a starting foam liquid by preparing a mixture (may be abbreviated below as "polyol mixture") formed of each of the components other than the polyisocyanate component and then mixing in the polyisocyanate component.

In the preparation of the polyol mixture, in order to reduce contact between the water which is the foaming agent and the catalyst component, it is preferable that, with respect to the polyol component, the catalyst component be mixed first, the foam stabilizer component, crosslinking agent component, and optional components as necessary be mixed next, and the water which is the foaming agent be mixed in finally.

After that, in the step of expansion molding the soft polyurethane foam, it is preferable that the polyol mixture and the polyisocyanate component be mixed and the starting foam liquid is prepared.

The viscosity of the prepared polyol mixture at a liquid temperature of 25°C is preferably 2,400 mPa-s or less, and more preferably 1,800 mPa-s or less. When in these preferable viscosity ranges, the stirring efficiency of the starting foam liquid is favorable, a sufficient amount of foaming is obtained uniformly through the entirety of the starting foam liquid, and a soft polyurethane foam (expansion-molded body) having desired physical properties is easily obtained.

The method for expansion molding the soft polyurethane foam using the starting foam liquid is not particularly limited and, for example, it is possible to apply a known method of introducing a starting foam liquid into a cavity formed in a mold and carrying out the expansion molding.

In the known methods described above, in order to prevent the separation of each of the components forming the starting foam liquid, the starting foam liquid is preferably prepared by mixing each of the components described above directly before introducing the starting foam liquid into the cavity. The liquid temperature of the introduced starting foam liquid is preferably 10 to 50°C, more preferably 20 to 40°C, and even more preferably 25 to 35°C. The temperature of the mold is preferably 40 to 80°C, more preferably 50 to 70°C, and even more preferably 60 to 65°C. When the liquid temperature of the starting foam liquid and the temperature of the mold are in the suitable ranges described above, it is possible to obtain suitable foaming. Following the foaming, the desired soft polyurethane foam is obtained by removal from the mold after curing in the mold. Here, a known film removal process may be further carried out on the obtained soft polyurethane foam.

### <Rigidity Distribution in Thickness Direction of Soft Polyurethane Foam (1)>

Regardless of the expansion molding method, in the first embodiment of the soft polyurethane foam according to the present invention, in the thickness direction (that is, the direction upward along the vertical line) from the lower layer to the upper layer during expansion molding, the lower layer during expansion molding has a substantially constant rigidity and the rigidity (hardness) tends to increase gradually from the middle layer through to the upper layer during the expansion molding.

That is, in the rigidity distribution in the thickness direction of the soft polyurethane foam of the first embodiment according to the present invention, there is a first region exhibiting a substantially constant trend and a second region exhibiting a continuous increasing trend or decreasing trend. In the second region, when viewed in a direction from the lower layer to the upper layer during the expansion molding of the soft polyurethane foam, the rigidity distribution exhibits an increasing trend; however, when viewed in a direction from the upper layer to the lower layer during the expansion molding of the same soft polyurethane foam, the rigidity distribution exhibits a decreasing trend.

The details of the mechanism by which the first embodiment of the soft polyurethane foam according to the present invention exhibits the rigidity distribution described above is unclear; however, it is considered that the combination of each of the components forming the starting foam liquid is a factor. In particular, it is considered that major factors are the main polymerizable group (reactive group) of the crosslinking agent component being an EO group, and a PO group in which crosslinking effect is substantially exerted not being included in the crosslinking agent component. In addition, it is considered that glycerin being contained as a crosslinking agent component, alkanolamine being contained as a crosslinking delay agent, and a gelling catalyst being contained as a catalyst component also contribute in no small part to the exhibition of the rigidity distribution described above.

### <Rigidity Distribution in Thickness Direction of Soft Polyurethane Foam (2)>

Regardless of the expansion molding method, in the second embodiment of the soft polyurethane foam according to the present invention, in the thickness direction (that is, the direction upward along the vertical line) from the lower layer to the upper layer during expansion molding, the rigidity (hardness) tends to increase gradually. That is, the rigidity distribution in the thickness direction of the soft polyurethane foam according to the present invention exhibits a continuous increasing trend or decreasing trend. Here, when viewed in a direction from the lower layer to the upper layer during the expansion molding of the soft polyurethane foam, the rigidity distribution exhibits an increasing trend; however, when viewed in a direction from the upper layer to the lower layer during the expansion molding of the same soft polyurethane foam, the rigidity distribution exhibits a decreasing trend.

The details of the mechanism by which the second embodiment of the soft polyurethane foam according to the present invention exhibits the rigidity distribution described above is unclear; however, it is considered that the combination of each of the components forming the starting foam liquid is a factor. In particular, it is considered that major factors are the main polymerizable group (reactive group) of the crosslinking agent component being an EO group, and a PO group in which a crosslinking effect is substantially exerted not being included in the crosslinking agent component. In addition, it is considered that glycerin being contained as a crosslinking agent component, alkanolamine being contained as a crosslinking delay agent, and a gelling catalyst being contained as a catalyst component also contribute in no small part to the exhibition of the rigidity distribution described above.

In addition, when the soft polyurethane foam exhibiting the rigidity distribution described above is cut in the thickness direction, a trend where the degree of flatness of the foam cell shape appearing in the cross-section gradually increases from the upper layer to the lower layer is seen during the expansion molding. That is, in the soft polyurethane foam obtained by the expansion molding, a trend is seen where the foam cells positioned in the lower layer during the expansion molding exhibit a long flat shape (elliptical shape) laterally due to being pressed in the direction of gravity, the degree of flatness in the foam cells positioned in the middle layer is comparatively softened to be close to a circle, and the degree of flatness in the foam cell positioned in the upper layer is further softened to be even closer to a circle. In this manner, it is considered that changes in the shape of the foam cells appearing in the cross-section of the thickness direction of the soft polyurethane foam correlate with the rigidity distribution trend described above.

Here, the "softness" of the soft polyurethane foam according to the present invention refers to hardness (rigidity) of a level where the soft polyurethane foam is recessed inward when pressed by hand or when sat on.

### Example

Next, a more detailed description will be given of the present invention using Examples; however, the present invention is not limited to these examples.

### [Example 1 to 6 and Comparative Examples 1 to 7]

Starting foam liquids were prepared by mixing the mixture including the components other than the polyisocyanate (B) and the polyisocyanate (B) at the blends illustrated in Table 1 and Table 2. A seat pad with a thickness of 70 mm was manufactured by introducing this starting foam liquid into the mold and carrying out expansion molding. For the obtained seat pad, the hardness was measured using the following measurement method and evaluated as follows.

**[Table 1]**

| Blend Component | | Example 1 | Example 2 | Example 3 | Example 4 | Example 5 | Example 6 |
|---|---|---|---|---|---|---|---|
| Polyol (A) | Polyether polyol (A1-1) | 52.5 | 52.5 | | | | 26.25 |
| | Polyether polyol (A1-2) | | | 52.5 | | | |
| | Polyether polyol (A1-3) | | | | 52.5 | | |
| | Polyether polyol (A1-4) | | | | | 52.5 | 26.25 |
| | Polymer polyol (A2-1) | 45 | 43.5 | 45 | 45 | 45 | 45 |
| Crosslinking Agent (C-1) | | | | | | | |
| Crosslinking Agent (C-2) | | 1 | 2 | 1 | 1 | 1 | 1 |
| Crosslinking Agent (C-3) | | 1.5 | 2 | 1.5 | 1.5 | 1.5 | 1.5 |
| Crosslinking Delay Agent (D-1) | | 0.5 | 0.5 | 0.5 | 0.5 | 0.5 | 0.5 |
| Catalyst (E-1) | | 0.75 | 0.75 | 0.75 | 0.75 | 0.75 | 0.75 |
| Catalyst (E-2) | | | | | | | |
| Catalyst (E-3) | | | | | | | |
| Foam Stabilizer (F-1) | | 1 | 1 | 1 | 1 | 1 | 1 |
| Foam Stabilizer (F-2) | | | | | | | |
| Foaming Agent (G-1) | | 3 | 3 | 3 | 3 | 3 | 3 |
| Total of Above (unit: parts by mass) | | 105.25 | 105.25 | 105.25 | 105.25 | 105.25 | 105.25 |
| Polyisocyanate (B) (unit: parts by mass) | | 77 | 77 | 78 | 79 | 76 | 76 |

**[Table 2]**

| Blend Component | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Polyol (A) | Polyether polyol (A1-1) | 45 | 45 | 46 | 46 | 66 | 46 | 49.5 |
| | Polyether polyol (A1-2) | | | | | | | |
| | Polyether polyol (A1-3) | | | | | | | |
| | Polyether polyol (A1-4) | | | | | | | |
| | Polymer polyol (A2-1) | 45 | 45 | 46 | 46 | 26 | 45 | 49 |
| Crosslinking Agent (C-1) | | 6.5 | 6.5 | 6.5 | 6.5 | 6.5 | 6.5 | 0 |
| Crosslinking Agent (C-2) | | 3.5 | 3.5 | 0 | 0 | 0 | 1 | 0 |
| Crosslinking Agent (C-3) | | | | 1.5 | 1.5 | 1.5 | 1.5 | 1.5 |
| Crosslinking Delay Agent (D-1) | | | | 0.5 | 0.5 | 0.5 | 0.5 | 0.5 |
| Catalyst (E-1) | | 0.4 | 0.4 | 0.75 | 0.75 | 0.75 | 0.75 | 0.75 |
| Catalyst (E-2) | | 0.2 | 0.2 | | | | | |
| Catalyst (E-3) | | 0.3 | 0.3 | | | | | |
| Foam Stabilizer (F-1) | | | | 1 | 1 | 1 | 1 | 1 |
| Foam Stabilizer (F-2) | | 1 | 1 | | | | | |
| Foaming Agent (G-1) | | 2.4 | 2.4 | 3 | 2.4 | 3 | 3 | 3 |
| Total of Above (unit: parts by mass) | | 104.3 | 104.3 | 105.25 | 104.65 | 105.25 | 105.25 | 105.25 |
| Polyisocyanate (B) (unit: parts by mass) | | 86 | 91 | 80 | 90 | 90 | 78 | 84 |

### <Measurement of Hardness at Each Depth Position>

Below, by reversing the up-and-down orientation at the time of expansion molding, the lower surface at the time of expansion molding is seen as the surface and the upper surface at the time of expansion molding is seen as the rear surface. The reason for this is that, in a case where the soft polyurethane foam is used as a seat pad, with a configuration where the surface side corresponding to the seat surface of the seat pad is soft, and the rear surface side on the opposite side to the seat surface is hard, a stable sense of comfort is easily obtained.

From the surface of a seat pad with a thickness of 70 mm, four evaluation samples with a height of 20 mm x width of 20 mm x thickness of 15 mm were each cut out, and the hardnesses thereof were measured.

The results of the measurement described above are shown in Tables 3 and 4. In the tables, the units of the measurement values are (unit: N/mm²). In addition, in the tables, the column "10.7% depth from the surface layer" corresponds to the first evaluation sample, the column "32.1% depth from the surface layer" corresponds to the second evaluation sample, the column "53.5% depth from the surface layer" corresponds to the third evaluation sample, and the column "75.0% depth from the surface layer" corresponds to the fourth evaluation sample.

### <25% Hardness>

Apart from hardness measured as described above, the 25% hardness was measured based on Japanese Industrial Standards JIS K 6400-2 for each molded body. Each measurement value (unit: N/mm 2) is shown in Tables 3 to 6.

**[Table 3]**

| Depth from surface | Example 1 | Example 2 | Example 3 | Example 4 | Example 5 | Example 6 |
|---|---|---|---|---|---|---|
| 10.7% | 0.518 | 0.498 | 0.524 | 0.550 | 0.554 | 0.502 |
| 32.1% | 0.519 | 0.499 | 0.524 | 0.551 | 0.607 | 0.519 |
| 53.5% | 0.596 | 0.554 | 0.579 | 0.596 | 0.681 | 0.596 |
| 75.0% | 0.710 | 0.647 | 0.682 | 0.694 | 0.777 | 0.710 |
| Total | 2.343 | 2.198 | 2.309 | 2.392 | 2.619 | 2.327 |
| 25% Hardness | 22.1 | 22.2 | 22.4 | 22.4 | 24.1 | 22.1 |

**[Table 4]**

| Depth from surface | Comparati ve Example 1 | Comparative Example 2 | Comparative Example 3 | Comparative Example 4 | Comparative Example 5 | Comparative Example 6 | Comparative Example 7 |
|---|---|---|---|---|---|---|---|
| 10.7% | 0.758 | 0.843 | 0.666 | 0.778 | 0.699 | 0.589 | 0.648 |
| 32.1% | 0.601 | 0.636 | 0.535 | 0.616 | 0.537 | 0.507 | 0.578 |
| 53.5% | 0.596 | 0.652 | 0.590 | 0.661 | 0.564 | 0.570 | 0.669 |
| 75.0% | 0.674 | 0.726 | 0.703 | 0.792 | 0.638 | 0.667 | 0.771 |
| Total | 2.629 | 2.856 | 2.495 | 2.847 | 2.438 | 2.332 | 2.666 |
| 25% Hardness | 20.9 | 24.4 | 21.4 | 25.9 | 22.6 | 20.4 | 25.5 |

### <Hardness Ratio>

The average of the measurement values of the hardness at four locations at different depth positions from the surface measured as described above was calculated and the hardness ratio of each location was calculated with respect to the average value. This hardness ratio refers to the ratio of the hardness of each location (each depth position) with respect to the average hardness of the expansion-molded body in the thickness direction. These results are shown in Tables 5 and 6. In addition, FIG. 1 shows a graph taking each depth position on the horizontal axis and the hardness ratio on the vertical axis.

### <Evaluation Criteria for Reduction of Sense of Instability>

In a case where the hardness ratio of the depth 10.7% (first evaluation sample) was greater than the hardness ratio of the depth 32.1 % (second evaluation sample), the sense of stability demanded as a seat pad was insufficient and it was determined that the sense of instability in a case where G was applied in the lateral direction was great [x].

In a case where the hardness ratio of the depth 10.7% was smaller than the hardness ratio of the depth 32.1% and the hardness ratio of the depth 10.7% was 0.80 or more to less than 1, the sense of stability demanded as a seat pad was present and it was determined that the sense of instability in a case where G was applied in the lateral direction was reduced [o].

These evaluation results are shown in Tables 5 to 6.

**[Table 5]**

| Depth from surface | Example 1 | Example 2 | Example 3 | Example 4 | Example 5 | Example 6 |
|---|---|---|---|---|---|---|
| 10.7% | 0.885 | 0.906 | 0.907 | 0.921 | 0.845 | 0.863 |
| 32.1% | 0.886 | 0.908 | 0.908 | 0.922 | 0.927 | 0.892 |
| 53.5% | 1.017 | 1.009 | 1.003 | 0.997 | 1.040 | 1.024 |
| 75.0% | 1.213 | 1.177 | 1.182 | 1.161 | 1.187 | 1.221 |
| Average measurement value | 0.586 | 0.550 | 0.577 | 0.598 | 0.655 | 0.582 |
| 25% Hardness | 22.1 | 22.2 | 22.4 | 22.4 | 24.1 | 22.1 |
| Sense of instability | O | O | O | O | O | O |

**[Table 6]**

| Depth from surface | Comparative Example | Comparative Example | Comparative Example | Comparative Example | Comparative Example | Comparative Example | Comparative Example |
|---|---|---|---|---|---|---|---|
| | 1 | 2 | 3 | 4 | 5 | 6 | 7 |
| 10.7% | 1.153 | 1.180 | 1.068 | 1.093 | 1.147 | 1.010 | 0.973 |
| 32.1% | 0.914 | 0.891 | 0.859 | 0.866 | 0.880 | 0.869 | 0.867 |
| 53.5% | 0.908 | 0.913 | 0.945 | 0.928 | 0.926 | 0.978 | 1.004 |
| 75.0% | 1.025 | 1.016 | 1.128 | 1.113 | 1.046 | 1.143 | 1.157 |
| Average measurement value | 0.657 | 0.714 | 0.624 | 0.712 | 0.610 | 0.583 | 0.667 |
| 25% Hardness | 20.9 | 24.4 | 21.4 | 25.9 | 22.6 | 20.4 | 25.5 |
| Sense of instability | X | X | X | X | X | X | X |

As shown in the graph of FIG. 1, in the soft polyurethane foams of Examples 1 to 6, the hardness in the thickness direction from the surface to the rear surface was not reduced. In the surface (upper surface) of depth 10.7% to depth 32.1%, the hardness (rigidity) was constant or increased. In addition, from the middle layer to the lower layer of depth 32.1% to depth 75.0%, the hardness (rigidity) was continuously increased. Accordingly, when viewed from the thickness direction of the soft polyurethane foam of Examples 1 to 6, the region where the rigidity was lowest was positioned on the surface (the upper layer) and the region where the rigidity was highest was positioned on the lower layer.

When viewed in the thickness direction, the soft polyurethane foams of Examples 1 to 4 and 6 have a surface layer (upper layer) where the rigidity (hardness) is constant and a middle layer and a lower layer where the rigidity is continuously increased. As a result, the sense of instability is reduced as demanded in seat pad applications. In addition, since the hardness ratio near the surface in Examples 1 to 4 and 6 is smaller than that of Comparative Examples 1 to 7, the resilience at the time of seating is softer and the sense of pressure from the seat surface is further reduced, thus seating comfort that is different from in the related art can be obtained.

When viewed from the thickness direction, the soft polyurethane foam of Example 5 has continuously increasing rigidity from the surface layer (upper layer) through to the lower layer. As a result, the sense of instability is reduced as demanded in seat pad applications. In addition, since the hardness ratio near the surface in Example 5 is smaller than that of Examples 1 to 4 and 6, the resilience at the time of seating is further softened and the sense of pressure from the seat surface is even further reduced, thus seating comfort that is different from in Examples 1 to 4 and 6 can be obtained.

As the factors behind the soft polyurethane foams of Examples 1 to 6 exhibiting the rigidity distribution described above, one or more of the following may be considered: including TDI as the main polyisocyanate component in the starting foam liquid of the soft polyurethane foam; including a large amount of glycerine as a crosslinking agent; including a large amount of alkanolamine as a crosslinking delay agent; including an EO-based crosslinking agent as a main crosslinking agent component substantially without including a PO-based crosslinking agent; and including a gelling catalyst as the main catalyst component.

It is considered that a trifunctional polyether polyol being contained and a tetrafunctional polyether polyol not being contained are factors behind there being a surface (upper layer) where the rigidity is substantially constant and the rigidity continuously increasing from the middle layer to the lower layer when viewed from the thickness direction of the soft polyurethane foam of Examples 1 to 4 and 6. In addition, it is considered that a tetrafunctional polyether polyol being contained and a trifunctional polyether polyol not being contained are factors behind the rigidity continuously increasing from the surface layer (upper layer) to the middle layer to the lower layer when viewed from the thickness direction of the soft polyurethane foam of Example 5.

On the other hand, as is clear from the graph of FIG 1, in the soft polyurethane foam of Comparative Examples 1 to 7, the hardness ratio of the depth 32.1% is decreased compared to that of the depth 10.7%. With such a rigidity distribution, in a case where G is applied in the horizontal direction, a sense of instability is easily generated because a feeling is generated in which the soft polyurethane foam is shifted laterally in the middle layer deeper than the surface close to the seating surface.

As a cause of the soft polyurethane foam of Comparative Examples 1 to 7 exhibiting the rigidity distribution described above, one or more of the following may be considered: glycerin not being included as the crosslinking agent in the starting foam liquid of the soft polyurethane foam; a large amount of a PO-based crosslinking agent being included as the crosslinking agent; and a large amount of a blowing catalyst being included as the catalyst.

The details of each of the material described in Table 1 and 2 described above are as follows.

"Polyether polyol A1-1" is a trifunctional polyether polyol with an EO/PO molar ratio of 13/87 and a weight-average molecular weight of 7,000.

"Polyether polyol A1-2" is a trifunctional polyether polyol with an EO/PO molar ratio of 15/85 and a weight-average molecular weight of 6,000.

"Polyether polyol A1-3" is a trifunctional polyether polyol with an EO/PO molar ratio of 15/85 and a weight-average molecular weight of 5,000.

"Polyether polyol A1-4" is a tetrafunctional polyether polyol with an EO/PO molar ratio of 16/84 and a weight-average molecular weight of 7,000.

"Polymer polyol A2-1" is a 3.2-functional polymer polyol with a solid content of 33%, a hydroxyl value of 23 mgKOH/g, and a weight-average molecular weight of 5,400, (manufactured by Sanyo Chemical Industries, Ltd., product name: KC855).

"Crosslinking agent C-1" is a trifunctional polyether polyol with an EO/PO molar ratio of 0/100 and a weight-average molecular weight of 700.

"Crosslinking agent C-2" is a commercially available tetrafunctional polyether polyol with an EO/PO molar ratio of 100/0 and a molecular weight of 400.

"Crosslinking agent C-3" is glycerin.

"Crosslinking delay agent D-1" is alkanolamine manufactured by Momentive Performance Materials Inc. (product name: PM-1).

"Catalyst E-1" is a commercially available gelling catalyst, triethylenediamine.

"Catalyst E-2" is a commercially available blowing catalyst, bis[2-(dimethylamino) ethyl]ether (manufactured by Tosoh Corporation, product name: TOYOCAT-ET33B).

"Catalyst E-3" is a commercially available diethanolamine.

"Foam stabilizer F-1" is a low activity type silicone-based foam stabilizer manufactured by Momentive Performance Materials Inc. (product name: L3623).

"Foam stabilizer F-2" is a high activity type silicone-based foam stabilizer manufactured by Evonik Industries. (product name: B8742).

"Foaming agent G-1" is water.

"Polyisocyanate (B)" is a commercially available polyisocyanate, a TDI-based isocyanate in which TDI/MDI are mixed at 80/20 (mass ratio).

Each configuration and combination thereof in each embodiment described above is merely an example, and addition, omission, substitutions, and other changes to the configuration are possible within a range not departing from the scope of the present invention. In addition, the present invention is not limited by each of the embodiments and is only limited by the scope of the claims.

### Industrial Applicability

The soft polyurethane foam according to the present invention can be widely used as a seat pad for a vehicle. In addition, the present invention provides a seat pad which provides seating comfort and a certain sense of stability, and a soft polyurethane foam which can realize the seat pad.

## Claims

1. A soft polyurethane foam obtained by expansion molding a starting foam liquid which contains a polyol, a polyisocyanate, a crosslinking agent, a foaming agent, and a catalyst,
wherein a polyether polyol having a weight-average molecular weight Mw of 3,000 to 12,000 and 3 to 4 functional groups is contained as the polyol,
an ethylene oxide group/propylene oxide group (molar ratio) in all compounds included therein as the crosslinking agent is 100 or more,
a short chain polyol having a weight-average molecular weight of 1,000 or less is contained as the crosslinking agent, and
tolylene diisocyanate is contained therein as the polyisocyanate in an isocyanate equivalent of 70 or more.

2. The soft polyurethane foam according to Claim 1,
wherein at least a gelling catalyst is contained out of a gelling catalyst and a blowing catalyst as the catalyst, and
a mass ratio of the gelling catalyst:the blowing catalyst is 100:0 to 100:100

3. The soft polyurethane foam according to Claim 1 or 2,
wherein 0.1 to 1.0 part by mass of alkanolamine is contained with respect to 100 parts by mass of the polyol in the starting foam liquid.

4. The soft polyurethane foam according to any one of Claims 1 to 3,
wherein the polyether polyol included in the starting foam liquid is one type and the polyether polyol has 3.5 or more functional groups.

5. The soft polyurethane foam according to any one of Claims 1 to 4,
wherein a polymer polyol is contained as the polyol.

6. The soft polyurethane foam according to any one of Claims 1 to 5,
wherein a rigidity distribution in a thickness direction of the soft polyurethane foam exhibits a continuous increasing trend or decreasing trend.

7. The soft polyurethane foam according to any one of Claims 1 to 5,
wherein, in a rigidity distribution in a thickness direction of the soft polyurethane foam, there is a region exhibiting a substantially constant trend and a region exhibiting a continuous increasing trend or decreasing trend.

8. A seat pad using the soft polyurethane foam according to any one of Claims 1 to 7.
